# EUROPÄISCHE PATENTSCHRIFT

(11) **EP 0 939 269 B1**
(45) Veröffentlichungstag und Bekanntmachung des Hinweises auf die Patenterteilung: **28.07.2004**
(21) Anmeldenummer: 99103387.9
(22) Anmeldetag: 22.02.1999
(51) Int. Cl.: F16L 47/02, B29C 65/34

(54) **Heizwendelfitting mit Schrumpfmantel sowie Herstellverfahren hierfür**
Heat-fusion coil fitting incorporating a shrink sleeve and a fabrication process for the same
Bobine de chauffage avec manchon retractable et méthode pour sa fabrication

(30) Priorität: 25.02.1998 DE 19807950
(43) Veröffentlichungstag der Anmeldung: 01.09.1999
(73) Patentinhaber: Merle, Bernd, 36304 Alsfeld (DE)
(72) Erfinder: Merle, Bernd, 36304 Alsfeld (DE)
(74) Vertreter: Fritsche, Rainer, Dipl.-Wirtsch.-Ing.

(56) Entgegenhaltungen:
- EP-A- 0 585 974
- DE-C- 3 932 807
- FR-A- 2 452 048
- GB-A- 2 325 501
- US-A- 3 943 334
- US-A- 4 362 684
- US-A- 4 906 313

## Beschreibung

Die Erfindung betrifft ein Heizwendelfitting gemäß dem Oberbegriff des Anspruchs.

Derartige Heizwendelfittinge werden zum dichten Verbinden wenigstens zweier Installationsbauteile, wie beispielsweise zweier Rohre aus Kunststoff eingesetzt. Hierzu weist das ebenfalls aus Kunststoff hergestellte Fittingrohr des Heizwendelfittings eine in seinem Inneren angeordnete Heizwendel auf, die über zwei nach außen geführte Anschlußleitungen mit einer elektrischen Energiequelle verbindbar ist. Um zwei Kunststoffrohre miteinander dicht zu verbinden, werden diese in das Fittingrohr eingeschoben, das einen Innendurchmesser aufweist, der geringfügig größer als der Außendurchmesser der beiden miteinander zu verbindenden Rohre ist. Anschließend wird ein elektrischer Strom der Heizwendel zugeführt, wobei ein Teil der zugeführten Energie infolge des der Heizwendel innewohnenden elektrischen Widerstandes in Wärme umgesetzt wird. Diese durchdringt langsam, von der Heizwendel ausgehend, die Kunststoffmaterialen der Rohre und des Fittings. Bei Überschreiten des Erweichungspunktes bzw. des Schmelzbereiches plastifizieren bzw. erweichen diese Materialien und fließen ineinander. Beim Erkalten härten sie dann als gas- bzw. flüssigdichte Verbindung zwischen den beiden Rohren und dem Fitting aus. Für diesen Vorgang wird auch der Begriff "Heizwendelschweißen" bzw. "Schweißen" verwendet.

Beim dichten Verbinden von Installationsbauteilen oder Armaturen, von denen wenigstens eines aus Kunststoff ist, unter Verwendung eines Heizwendelfittings sind verschiedene Gesichtspunkte zu berücksichtigen, die teilweise gegenläufig sind. Zunächst ist zu beachten, daß die Erweichungs- bzw. Schmelztemperatur für ein genügend großes Volumen an der Verbindungsstelle von den beispielsweise beiden Kunststoffrohren und dem Fitting überschritten wird. Mit anderen Worten muß eine ausreichende Durchwärmung an den beiden Rohren und dem Fitting vorhanden sein. Eine zu geringe Durchwärmung hat mangelnde Stabilität nach der Aushärtung, eine zu große Durchwärmung eine Deformation während der Aufwärm- bzw. Aufheizphase zur Folge. Außerdem darf eine bestimmte Temperatur oberhalb der Erweichungs- bzw. Schmelztemperatur an keinem Punkt des bzw. der Materialien überschritten werden, sonst tritt eine chemische Alterung bzw. Versprödung des bzw. der Kunststoffmaterialien ein. Schließlich muß in der Verbindungs- bzw. Schweißzone während des Schweißvorgangs ein Fügedruck aufgebaut werden, um eine ausreichende Vernetzung bzw. Durchdringung des Materials der Kunststoffrohre und des Fittings zu gewährleisten.

Bei den in der Praxis bekannten Heizwendelfittingen wird der vorstehend erwähnte Fügedruck ausschließlich durch die thermische Ausdehnung des Kunststoffmaterials und durch parasitäres Schrumpfen der spritzgegossenen Fittingrohre erreicht. Hierbei hat es sich als nachteilig erwiesen, daß die Spaltweite zwischen beispielsweise zwei miteinander zu verbindenden Kunststoffrohren und dem Heizwendelfitting vor dem Verschweißen nicht klar definiert ist. Es kann hier insbesondere bei großen Heizwendelfittingen zu Spalten von mehreren Millimetern kommen. Dies kann zu einem unzureichenden thermischen Kontakt zwischen den beiden miteinander zu verbindenden Installationsbauteilen und dem Heizwendelfitting sowie zu einem mangelnden Fügedruck führen, was zwangsläufig zu undichten Verbindungen führt.

Aus dem US-Patent 4,972,184 geht ein Heizwendelfitting der eingangs genannten Art hervor, dessen Rohrwand aus zwei rohrartigen Lagen aufgebaut ist. Hierbei ist an der Außenumfangsseite der ersten rohrartigen Lage koaxial die zweite rohrartige Lage angeordnet. Zwischen den beiden rohrartigen Lagen ist der wendelförmig verlaufende Heizdraht vorgesehen. Die innenliegende, erste Lage ist dabei aus einem thermoplastischen Material hergestellt. Demgegenüber ist die außenliegende, zweite Lage des Fittings aus einem duroplastischen Material gefertigt.

Die mit diesem bekannten Heizwendelfitting zu verbindenden Installationsbauteile sind ebenfalls zweilagig aufgebaut, wobei hinsichtlich des Materials die innenliegende, erste Lage der Installationsbauteile der außenliegenden, zweiten Lage des Heizwendelfittings und die außenliegende, zweite Lage der Installationsbauteile der innenliegenden, ersten Lage des Heizwendelfittings entspricht. Die außenliegende, zweite Lage der Installationsbauteile sowie die innenliegende, erste Lage des Heizwendelfittings stellen infolge ihres thermoplastischen Materials die gute Materialverbindung zwischen den einzelnen Bauteilen beim Schweißen sicher. Demgegenüber sollen die innenliegende, erste Lage der Installationsbauteile sowie die außenliegende, zweite Lage des Heizwendelfittings eine ausreichende Formstabilität gewährleisten. Daher dürfen gerade die zuletzt genannten Lagen während des Verbindungsvorgangs keiner Formänderung unterliegen, da andernfalls eine dichte Verbindung nicht gewährleistet ist. Daher besteht aber hier im Falle von verhältnismäßig großen Spalten zwischen den miteinander zu verbindenden Bauteilen die gleichen Probleme hinsichtlich des unzureichenden Kontakts zwischen den Teilen und des mangelenden Fügedrucks, wie sie bereits vorstehend im Zusammenhang mit den aus der Praxis bekannten Heizwendelfittingen erläutert worden sind.

Weiterhin geht aus der europäischen Patentanmeldung 0 378 406 ein Heizwendelfitting mit einem zweilagigen Aufbau hervor, wobei die innenliegende Lage aus einem nichtvernetzten und die außenliegende Lage aus einem vernetzten Polyolefin besteht. Die nichtvernetzte, innenliegende Lage soll eine bessere Verbindung zwischen dem Material dieser Lage und dem außenliegenden Material des oder der Installationsbauteile sicherstellen. Eine Maßnahme zur Beseitigung von Maßtoleranzen ist in dieser Entgegenhaltung nicht diskutiert.

Darüber hinaus geht aus dem US-Patent 3,943,334 ein Heizwendelfitting hervor, welches aus zwei koaxial zueinander angeordneten Lagen hergestellt ist. Hinsichtlich des Materials dieser beiden Lagen ist in dieser Entgegenhaltung lediglich ausgeführt, dass sie durch einen Spritzgussvorgang verarbeitet werden können.

Schließlich geht aus dem US-Patent 4,362,684 ein Heizwendelfitting hervor, bei dem der Widerstands-Heizdraht in einem thermoplastischen Kunststoffgehäuse angeordnet ist, welches von einer Hülle umgeben ist, die aus einem zu dem Material der Rohrwand des Fittings gleichen oder ähnlichen Material gefertigt sein kann. Nähere Angaben über das Material finden sich in dieser Entgegenhaltung jedoch nicht.

Es ist Aufgabe der vorliegenden Erfindung, ein Heizwendelfitting sowie ein Herstellverfahren hierfür zu schaffen, die unabhängig von dem Durchmesser der zu verbindenden Rohre und dem Fitting eine dichte Verbindung ermöglichen.

Die vorstehende Aufgabe wird hinsichtlich des Heizwendelfittings durch die Merkmale des Anspruchs 1 gelöst. Durch die inhomogene Gestaltung des Fittingrohres aus einem ersten Material, das bei Erwärmung zumindest plastifiziert bzw. erweicht, vorzugsweise schmilzt, und einem zweiten Material, das vorzugsweise zumindest bei Erwärmung einem Schrumpfvorgang unterliegt, wird zum einen die Durchdringung bzw. das Verschmelzen der miteinander zu verbindenden Installationsbauteile sowie des Heizwendelfittings unterstützt und zum anderen ein ausreichend hoher Fügedruck durch den Schrumpfvorgang des zweiten Materials erzielt. Daher kann selbst bei Heizwendelfittingen mit einem großen Durchmesser und/oder bei Verbindungen mit einem großen Spalt zwischen der Innenumfangswand des Heizwendelfittings und den Außenumfangswänden der beiden miteinander zu verbindenden Installationsbauteile eine sichere und dichte Verbindung erreicht werden. In diesem Zusammenhang ist noch zu bemerken, daß im Falle eines Heizwendelfittings, mit dem beispielsweise ein Kunststoffrohr mit einem Ventil aus Metall oder dgl. verbunden werden soll, der vorstehend geschilderte inhomogene Aufbau des Heizwendelfittings sich auch nur über einen Abschnitt in Längsrichtung des Heizwendelfittings erstrecken kann, nämlich über denjenigen Bereich, in dem das Kunststoffrohr aufgenommen ist.

Um dabei eine bessere, insbesondere schnellere Durchwärmung des Heizwendelfittings zu erreichen, ist der für das Heizelement verwendete Heizleiter mit einer Querschnittsflächenform vorgesehen, deren Ausdehnung in Richtung der Mittellängsachse des Fittingrohres kleiner als in radialer Richtung ist, da die Wärme über die bessere Wärmeleitfähigkeit des Heizleiters schneller in die Tiefe dringt oder dort direkt erzeugt wird. Insbesondere bei Fittingen mit großen Wandstärken bzw. großen Durchmessern kann hierdurch trotz des großen Durchmessers bzw. der großen Wandstärke ein schnelles, insbesondere gas- bzw. flüssigdichtes Verschweißen der miteinander zu verbindenden Installationsbauteile, Armaturen usw. erzielt werden, da der Heizleiter das Fittingrohr entsprechend weit in dessen radialer Richtung durchsetzt. Es besteht hierbei auch nicht die Gefahr, daß das Material in der Nähe der Innenumfangsfläche des Fittingrohres bereits einer chemischen Alterung ausgesetzt ist, während das sich in Richtung der Außenumfangsfläche daran anschließende Material noch nicht die zu einem optimalen Verbinden der Installationsbauteile notwendige Temperatur erreicht hat. Durch eine geeignete Wahl des Aspektverhältnisses, d.h. des Verhältnisses von Breite zu Höhe der besagten Querschnittsfläche des Heizleiters kann dieser in bezug auf optimale Durchwärmung und Stabilität optimiert werden. Dieser Gedanke sowie die hiermit verbundenen weiteren vorteilhaften Ausgestaltungen können auch unabhängig von dem inhomogenen Aufbau der Rohrwand bei Heizwendelfittingen vorteilhaft eingesetzt werden.

Grundsätzlich besteht die Möglichkeit, daß der inhomogene Aufbau des Heizwendelfittings dadurch erzielt wird, daß das dem Schrumpfvorgang unterliegende, zweite Material in dem nicht schrumpfenden, ersten Material eingelagert ist. Eine weitere vorteilhafte Ausgestaltung der vorliegenden Erfindung besteht darin, daß die Rohrwand des Fittingrohres einen Sandwichaufbau aufweist, bei dem mindestens eine erste, vorzugsweise rohrartige Lage aus dem ersten Material und wenigstens eine zweite, ebenfalls vorzugsweise rohrartige Lage aus dem zweiten Material vorgesehen ist. Selbstverständlich können auch mehrere Lagen aus dem ersten Material und/oder dem zweiten Material vorhanden sein.

Hierbei kann vorgesehen sein, daß die erste Lage aus dem ersten Material konzentrisch von der zweiten Lage des zweiten Materials umgeben ist. Dies kann beispielsweise dadurch realisiert werden, daß das Fittingrohr wenigstens einen Kernmantel, der das Heizelement, beispielsweise in Form einer Heizwendel aufnimmt und der aus dem ersten Material, vorzugsweise aus einem bei Erwärmung zumindest plastisch werden Kunststoff besteht, und mindestens einen Außenmantel enthält, der den Kernmantel konzentrisch umgibt und der aus dem zweiten Material, vorzugsweise aus einem thermoschrumpfenden Material besteht.

Damit beim Verschweißen der Installationsbauteile und dem Fitting ein Herauspressen von geschmolzenem Material aus dem Spalt zwischen dem Fittingrohr und den zu verbindenden Installationsbauteilen verhindert wird, kann weiterhin vorgesehen werden, daß das Heizelement unter Ausbildung von in Längsrichtung des Fittingrohres vorgesehenen, unbeheizten Zonen im Inneren des Fittingrohres angeordnet ist. Vorzugsweise können diese unbeheizten bzw. kalten Zonen an den beiden stirnseitigen Enden des Fittingrohres und/oder in der Mitte des Fittingrohres vorgesehen sein.

Die radiale Ausdehnung der Querschnittsfläche des Heizleiters kann beliebig gewählt werden, solange die vorstehend genannte Bedingung erfüllt ist. Es hat sich als vorteilhaft herausgestellt, daß die radiale Ausdehnung des Heizleiters mindestens 30 % der radialen Wanddicke des Fittings betragen soll. Hierdurch wird sichergestellt, daß die Wärmeenergie schnell in das Material der Rohrwand des Heizwendelfittings eingebracht wird.

Grundsätzlich kann für den Heizleiter jede beliebige Querschnittsflächengeometrie gewählt werden, solange die vorstehende Bedingung erfüllt ist. Es hat sich als besonders vorteilhaft erwiesen, wenn die Querschnittsfläche zumindest annährend rechteckförmig ist, wobei die Schmal- bzw. Breitseite des Rechtecks im wesentlichen parallel zur Mittellängsachse des Fittingrohres und die Längsseite im wesentlichen in radialer Richtung des Fittingrohres verläuft.

Bei einer rechteckförmigen Ausgestaltung des Heizleiters hat es sich als vorteilhaft erwiesen, wenn daß Verhältnis von Höhe zu Breite des rechteckförmigen Heizleiters mindestens 5:2 beträgt.

Eine besonders gute Verbindung wird dadurch erzielt, daß der Heizleiter des vorzugsweise durch eine Heizwendel gebildeten Heizelements bündig mit der Innenumfangsfläche des Fittingrohres abschließt. Weist dabei die Querschnittsfläche des Heizelements eine Rechteckform auf, so wird hierdurch insbesondere auch eine gute Durchwärmung der beiden miteinander zu verbindenen Installationsbauteile erreicht, da im Gegensatz zu den bekannten Heizwendelfittingen mit einem einen kreisförmigen Querschnitt besitzenden Heizwendelleiter eine flächige Berührung zwischen Heizleiter und dem jeweiligen Installationsbauteil erreicht wird. Bei den bekannten Heizwendelfittingen findet sich dort dagegen nur eine Linienberührung.

Die Steigung des wendelförmig gewickelten Heizleiters kann je nach den Verhältnissen beliebig gewählt werden. Es hat sich als vorteilhaft herausgestellt, wenn die Steigung mindestens der Höhe des Heizleiters bzw. seiner radialen Ausdehnung entspricht.

Für das erste Material kann beispielsweise ein Thermoplast, wie zum Beispiel Polyethylen, vernetztes Polyethylen, Polypropylen usw. vorgesehen werden, wogegen für das zweite Material ein insbesondere thermoschrumpfendes Material, wie es beispielsweise von einem Schrumpfschlauch bekannt ist, oder zum Beispiel ein VPE, ein Kunststoff mit einem Memoryeffekt usw. eingesetzt werden kann.

Für den Heizleiter des Heizelements, das vorzugsweise durch eine Heizwendel gebildet ist, kann jedes Material eingesetzt werden, daß einen ausreichend hohen elektrischen Widerstand zur für einen Schweißvorgang ausreichenden Umsetzung der zugeführten elektrischen Energie in Wärmeenergie aufweist. Vorzugsweise kann der Heizleiter aus einer Kupferlegierung bestehen. Ebenfalls wäre für den Heizleiter als Material Kupfer, Nickellegierungen, Maganin, Konstantan, leitfähige Kunststoffe usw. einsetzbar.

Je nach gewähltem Material für den Heizleiter des Heizelements kann es genügen, daß dieser beispielsweise einfach zu einer Heizwendel gewickelt wird. Um jedoch ein Reißen des Heizleiters beim Wickeln zu einer Wendel zu vermeiden, kann es weiterhin von Vorteil sein, wenn der Heizleiter vorzugsweise auf seiner von der Innenumfangsfläche des Fittingrohres wegweisenden Seite mit Einkerbungen versehen ist. Selbstverständlich können die Einkerbungen auch auf der zu der Innenumfangsfläche des Fittingrohres weisenden Seite oder in jeder beliebigen Lage an dem Heizleiter vorgesehen sein. Weiterhin können diese Einkerbungen in Längsrichtung des Heizleiters sowohl in einem konstanten als auch in einem nicht konstanten Abstand zueinander angeordnet sein.

Grundsätzlich besteht die Möglichkeit, daß mehrere Heizelemente in einem Fittingrohr vorgesehen sind. Eine derartige Lösung bietet sich beispielsweise bei einem T-förmigen Fittingrohr an, welches beispielsweise zum Verbinden von drei Rohren eingesetzt werden kann. Ist das Fittingrohr lediglich zum Verbinden von beispielsweise zwei Kunststoffrohren vorgesehen, so ist es vorteilhaft, wenn sich ein Heizelement über die gesamte Axiallänge des Fittingrohres erstreckt.

Wie dies bereits vorstehend angesprochen wurde, ist die vorliegende Erfindung nicht auf den Einsatz von Heizwendelfittingen beschränkt, die zum Verbinden von zwei Rohren vorgesehen sind. Sie kann beispielsweise auch für T-förmige Heizwendelfittinge, die zum Verbinden von drei Rohren vorgesehen sind, usw. eingesetzt werden. Weiterhin kann das erfindungsgemäße Heizwendelfitting auch in der Weise eingesetzt werden, daß beispielsweise zunächst nur ein Kunststoffrohr eingeschoben und mit dem Heizwendelfitting verschweißt wird. Das andere Installationsbauteil bzw. die andere Armatur kann dann durch ein später noch einzubringendes Kunststoffrohr, ein in das freie Ende des Fittingrohres einschraubbares Ventil aus Metall oder ein Ventil aus Kunststoff, einen Schlauch usw. gebildet sein. Bei einer derartigen Ausgestaltung bietet es sich vorteilhaft an, wenn das Heizwendelfitting zwei unabhängig voneinander ansteuerbare Heizelemente besitzt, so daß mit dem einen Heizelement das zunächst eingebrachte Kunststoffrohr mit dem Heizwendelfitting verschweißt werden kann, wogegen das zweite Heizelement dann zum Verbinden des weiteren Installationsbauteils mit dem Heizwendelfitting dient. Selbstverständlich ist die Zahl der in dem Heizwendelfitting vorzusehenden Heizelemente hierdurch nicht festgelegt; es ist für jeden beliebigen Einsatzzweck eine entsprechende Zahl an Heizelementen möglich.

Weitere vorteilhafte Ausgestaltungen sowie ein Ausführungsbeispiel werden nachstehend unter Bezugnahme auf die beigefügte Zeichnungsfiguren näher erläutert. Hierbei zeigt:
- Figur 1: eine Teilquerschnittsansicht in Längsrichtung eines Heizwendelfittings;
- Figur 2: eine Teilquerschnittsansicht in Längsrichtung eines weiteres Ausführungsbeispiels eineserfindungsgemäßen Fittings; und
- Figur 3: eine Seitenansicht eines Heizleiters für ein Heizelement eines erfindungsgemäßen Heizwendelfittings.

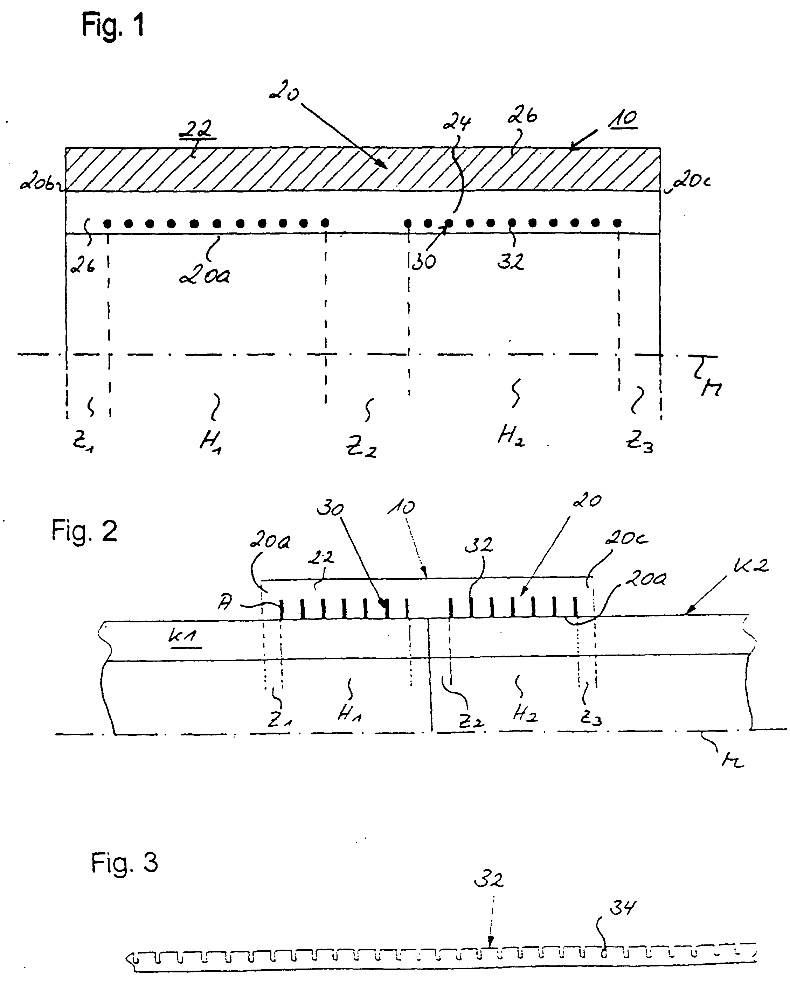

In den Figuren 1 und 2 ist jeweils in einem Teillängsquerschnitt ein Heizwendelfitting 10 wiedergegeben wobei das Heizwendelfitting 10 in Fig. 1 zwar den inhomogenen Aufbau der Rohrwand des Fittings zeigt, der Heizleiter aber im Gegensatz zu der Erfindung einen runden Querschnitt besitzt. Die Mittelängs- bzw. Symmetrielängsachse M des Heizwendelfittings 10 verläuft, bezogen auf Figur 1 und 2, horizontal. In den Figuren 1 und 2 sind gleiche Bauteile mit gleichen Bezugszeichen gekennzeichnet.

Das Heizwendelfitting 10 der Figur 1 weist ein Fittingrohr 20 und ein Heizelement 30 vorzugsweise in Form einer Heizwendel auf. Die das Fittingrohr 20 definierende Rohrwand 22 umfaßt einen eine erste rohrartige Lage bildenden Kernmantel 24 und einen eine zweite rohrartige Lage bildenden Außenmantel 26, der den Kernmantel 24 konzentrisch umgibt. Hierbei liegt der Außenmantel 26 flächig an dem Kernmantel 24 an. Wie in der Figur 1 dargestellt, schließt der Außenmantel 26 mit dem Kernmantel 24 an den Stirnseiten bündig ab. Grundsätzlich besteht aber auch die Möglichkeit, daß der Außenmantel 26 eine längere oder kürzere axiale Länge besitzt als der Kernmantel 24.

Der Kernmantel 24 besteht aus einem bei Erwärmung zumindest plastifizierenden bzw. erweichenden Material, vorzugsweise aus einem thermoplastischen Kunststoff. Im Inneren des Kernmantels 24 ist der aus vorzugsweise einer Kupferlegierung hergestellte und bei diesem Ausführungsbeispiel mit rundem Querschnitt ausgestaltete Heizleiter 32 der Heizwendel 30 in der Weise angeordnet, daß er sich in der Nähe der Innenumfangswand 20a des Fittingrohres 20 bzw. des Kernmantels 24 im Inneren des Kernmantels 24 befindet. Der Heizleiter 32 ist spiralförmig gewickelt und über nicht weiter dargestellte Anschlußenden mit einer elektrischen Energiequelle verbindbar.

Wie aus der Figur 1 hervorgeht, ist der Heizleiter 32 der Heizwendel 30 in der Weise im Inneren des Kernmantels 24 angeordnet, daß zwei Heizbereiche H₁, H₂ und drei unbeheizte bzw. "kalte" Zonen Z₁, Z₂, Z₃ vorhanden sind. Mit anderen Worten besitzt der Heizleiter 32 der Heizwendel 30 zwei Bereiche H₁, H₂, in denen jeweils elf Wicklungen vorhanden sind, wobei diese beiden Bereiche H₁, H₂ durch eine unbeheizte Zone Z₂ voneinander in axialer Richtung des Heizwendelfittings 10 getrennt sind. An den beiden stirnseitigen Enden 20b, 20c des Fittingrohres 20 sind ebenfalls unbeheizte Zonen Z₁, Z₃ vorgesehen, die sich von dem jeweiligen stirnseitigen Ende 20b, 20c axial in das Innere des Fittingrohres 20 bzw. des Kernmantels 24 erstrecken.

Der Außenmantel 26 des Heizwendelfittings 10 besteht aus einem schrumpfenden Material, wie beispielsweise VPE, einem Kunststoff mit Memory-Effekt usw. Vorzugsweise zumindest bei einer Erwärmung des Außenmantels 26 durch die Heizwendel 30 schrumpft das Material des Außenmantels 26 und übt dadurch einen Druck auf den Kernmantel 24 und damit auf die beiden miteinander zu verbindenden, in der Figur 1 jedoch nicht dargestellten Rohre aus vorzugsweise thermoplastischen Kunststoff aus.

Zur Herstellung des erfindungsgemäßen Heizwendelfittings 10 wird zunächst der Kernmantel 24 mit der Heizwendel 30 versehen. Anschließend wird der Außenmantel 26 auf den Kernmantel 24 aufgebracht. Hierzu weist der Außenmantel 26 einen Innendurchmesser auf, der kleiner ist als der Außendurchmesser des Kernmantels 24. Nach einem Aufweiten des Innendurchmessers des Außenmantels 26 kann der Außenmantel 26 auf die Außenumfangsfläche des Kernmantels 24 aufgeschoben werden. Infolge der Schrumpfeigenschaften des Außenmantels 26 sitzt anschließend der Außenmantel 26 fest auf dem Kernmantel 24 auf.

In Figur 2 ist ein Ausführungsbeispiel eines erfindungsgemäßen Heizwendelfittings 10 gezeigt. Bei diesem Heizwendelfitting ist die Aufteilung in einen Kernmantel und in einen Außenmantel zum Zwecke der Verdeutlichung des weiteren Erfindungsgedankens unterblieben.

Wie aus Figur 2 ersichtlich ist, besitzt der Heizleiter 32 der Heizwendel 30 einen rechteckförmigen Querschnitt bzw. eine rechteckförmige Querschnittsfläche A, wobei der Querschnitt in einer die Mittellängsachse M des Fittingrohres 20 enthaltenden Ebene verläuft. Die Breite des rechteckförmigen Heizleiters 32, d.h. seine Länge in axialer Richtung des Fittingrohres 20 ist kleiner als seine Länge in radialer Richtung des Rohres 20. Vorzugsweise beträgt das Verhältnis zwischen der axialen Länge der Querschnittsfläche A (= Breite der Querschnittsfläche A) und der radialen Länge der Querschnittfläche A (= Höhe der Querschnittsfläche A) 2:5. Hierdurch dringt der Heizleiter 32 weitaus tiefer in das Material des Fittingrohres 20 ein, als dies bei einem Fittingrohr mit gleicher Wandstärke und einem Heizleiter mit rundem Querschnitt der Fall ist, wie ein einfacher Vergleich der Figuren 1 und 2 zeigt. Es hat sich als vorteilhaft erwiesen, wenn die radiale Ausdehnung des Heizleiters 32 bzw. die Höhe der Querschnittsfläche A wenigstens 30 % der radialen Wanddicke der Rohrwand 22 beträgt. Auf Grund des rechteckförmigen Querschnitts des Heizleiters 32 ist auch der Abstand zwischen zwei aufeinanderfolgenden Heizleiterwendeln konstant, so daß, im Gegensatz zum Stand der Technik mit einem einen kreisförmigen Querschnitt aufweisenden Heizleiter, die Zwischenbereiche zwischen zwei aufeinanderfolgenden Heizleiterwendeln gleichmäßig erwärmt werden. Der Abstand bzw. die Steigung des wendelförmigen Heizleiters 32 entspricht vorzugsweise wenigstens der Länge der radialen Ausdehnung des Heizleiters 32.

In Figur 3 ist eine Seitenansicht des beispielsweise aus einer Kupferlegierung hergestellten Heizleiters 32 des erfindungsgemäßen Heizwendelfittings 30 wiedergegeben. Wie daraus ersichtlich ist, ist der Heizleiter 32 in gleichmäßigen Abständen an seiner von der Innenumfangsfläche 22 des Fittingrohres 20 wegweisenden Seite mit in gleichen Abstand zueinander angeordneten Einkerbungen 34 versehen. Diese Einkerbungen 34 ermöglichen u.a. ein spiralförmiges Wickeln des Heizleiters 32 zu einer Heizwendel 30, ohne daß er hierbei reißt.

Wie weiterhin aus Figur 2 hervorgeht, schließt bei dem erfindungsgemäßen Heizwendelfitting 10 der Heizleiter 32 der Heizwendel 30 bündig mit der Innenumfangsfläche 20a des Fittingrohres 20 ab. Aufgrund des rechteckförmigen Querschnitts des Heizleiters 32 der Heizwendel 30 wird darüber hinaus im Gegensatz zu einem Heizleiter mit rundem Querschnitt auch eine bessere Durchwärmung der beiden miteinander zu verbindenden Rohre K1, K2 erreicht, da der Heizleiter 32 mit seiner Breitseite jeweils auf den miteinander zu verbindenden Rohren "aufsteht". Demgegenüber ist bei einem Heizleiter mit einem kreisförmigen Querschnitt, wie es häufig im Stand der Technik der Fall ist, nur eine Linienberührung zwischen dem Heizleiter und den beiden miteinander zu verbindenden Rohren K1, K2 möglich.

Wie dies bereits vorstehend dargelegt wurde, ist die Heizwendel 30 in dem Fittingsrohr 20, um ein Ausfließen von warmen Kunststoff aus dem Heizwendelfitting 10 zu verhindern, darin so angeordnet, daß insgesamt drei unbeheizte Zonen oder "kalte" Zonen Z₁, Z₂, Z₃ zwischen den beiden beheizten Zonen H₁, H₂, die jeweils sieben Wicklungen bzw. Wendeln umfassen, vorhanden sind. Die unbeheizten Zonen Z₁, Z₃ erstrecken sich von den stirnseitigen Enden 20b, 20c des Fittingrohres 20 axial nach Innen. Die dritte "kalte" Zone Z₂ liegt in der Mitte des Fittingrohres 20.

## Patentansprüche

1. Heizwendelfitting zum Verbinden von wenigstens zwei Installationsbauteilen (K1, K2), von denen mindestens eines aus Kunststoff ist, mit einem Fittingrohr (20), das die wenigstens zwei miteinander zu verbindenden Installationsbauteile (K1, K2) übergreift, und mit mindestens einem in der Rohrwand (22) des Fittingrohres (20) zumindest abschnittsweise angeordneten Heizelement (30), wobei die Rohrwand (22) des Fittingrohres (20) wenigstens abschnittsweise einen inhomogenen Aufbau mit wenigstens einem ersten Material aufweist, das bei Erwärmung zumindestens plastifiziert, wobei für den inhomogenen Aufbau der Rohrwand (22) des Fittingsrohres (20) weiterhin mindestens ein zweites Material vorgesehen ist, das bei Erwärmen einem Schrumpfvorgang unterliegt,
**dadurch gekennzeichnet, daß** der das Heizelement (30) bildende Heizleiter (32), bezogen auf eine die Mittellängsachse (M) des Fittingrohres (20) enthaltende Schnittebene, eine Querschnittsfläche (A) aufweist, deren Ausdehnungen in Richtung der Mittellängsachse (M) des Fittingrohres (20) kleiner als in radialer Richtung, bezogen auf das Fittingrohr (20), ist.

2. Heizwendelfitting nach Anspruch 1,
**dadurch gekennzeichnet, daß** das zweite Material (26) in dem ersten Material (24) eingelagert ist

3. Heizwendelfitting nach Anspruch 1,
**dadurch gekennzeichnet, daß** die Rohrwand (22) des Fittingrohres (20) aus mindestens einer ersten Lage aus dem ersten Material (24) und wenigstens einer zweiten Lage aus dem zweiten Material (26) gebildet ist.

4. Heizwendelfitting nach Anspruch 3,
**dadurch gekennzeichnet, daß** die erste Lage aus dem ersten Material (24) von der zweiten Lage aus dem zweiten Material (26) konzentrisch umgeben ist.

5. Heizwendelfitting nach einem der Ansprüche 1 bis 4,
**dadurch gekennzeichnet, daß** das Heizelement (30) unter Ausbildung von unbeheizten Zonen (Z₁, Z₂, Z₃) im Inneren des Fittingrohres (20) angeordnet ist.

6. Heizwendelfitting nach Anspruch 5,
**dadurch gekennzeichnet, daß** die radiale Ausdehnung des Heizleiters (32) wenigstens 30 % der radialen Wanddicke der Rohrwand (22) beträgt.

7. Heizwendelfitting nach Anspruch 5 oder 6,
**dadurch gekennzeichnet, daß** die Querschnittsfläche (A) rechteckförmig ist und daß das Verhältnis von radialer Ausdehnung zu axialer Ausdehnung der Querschnittsfläche (A) 5:2 beträgt.

8. Heizwendelfitting nach einem der Ansprüche 1 bis 7,
**dadurch gekennzeichnet, daß** die Steigung des wendelförmig gewickelten Heizleiters (32) wenigstens der radialen Ausdehnung des Heizleiters (32) entspricht.

## Claims

1. Heating coil fitting for connecting at least two installation elements (K1, K2), at least one of which is made of plastic, with a fitting pipe (20), which overlaps the at least two installation elements (K1, K2) to be connected to each other, and with at least one heating element (30) arranged at least in certain sections in the pipe wall (22) of the fitting pipe (20), the pipe wall (22) of the fitting pipe (20) having at least in certain sections an inhomogeneous structure with at least a first material which at least becomes plastic when heated, at least a second material, which undergoes shrinkage when heated, also being provided for the inhomogeneous structure of the pipe wall (22) of the fitting pipe (20), **characterized in that** the heating conductor (32) forming the heating element (30) has with respect to a sectional plane containing the central longitudinal axis (M) of the fitting pipe (20) a cross-sectional surface area (A) which extends less in the direction of the central longitudinal axis (M) of the fitting pipe (20) than it extends in the radial direction with respect to the fitting pipe (20).

2. Heating coil fitting according to Claim 1, **characterized in that** the second material (26) is integrated in the first material (24).

3. Heating coil fitting according to Claim 1, **characterized in that** the pipe wall (22) of the fitting pipe (20) is formed by at least a first layer of the first material (24) and at least a second layer of the second material (26).

4. Heating coil fitting according to Claim 3, **characterized in that** the first layer of the first material (24) is concentrically surrounded by the second layer of the second material (26).

5. Heating coil fitting according to one of Claims 1 to 4, **characterized in that** the heating element (30) is arranged in the interior of the fitting pipe (20) in such a way as to form unheated zones (Z₁, Z₂, Z₃).

6. Heating coil fitting according to Claim 5, **characterized in that** the radial extent of the heating conductor (32) is at least 30% of the radial wall thickness of the pipe wall (22).

7. Heating coil fitting according to Claim 5 or 6, **characterized in that** the cross-sectional surface area (A) is rectangular and **in that** the ratio of the radial extent to the axial extent of the cross-sectional surface area (A) is 5:2.

8. Heating coil fitting according to one of Claims 1 to 7, **characterized in that** the pitch of the helically wound heating conductor (32) corresponds at least to the radial extent of the heating conductor (32).

## Revendications

1. Raccord chauffant pour le raccordement d'au moins deux éléments d'installation (K1, K2) dont l'un au moins est en plastique, avec un tube de raccord (20) qui recouvre au moins deux éléments d'installation (K1, K2) à raccorder, et avec au moins un élément chauffant (30) disposé au moins par sections dans la paroi de tube (22) du tube de raccord (20), la paroi de tube (22) du tube de raccord (20) présentant au moins par sections une structure non homogène avec au moins un premier matériau qui au moins se ramollit lorsqu'il est chauffé, au moins un deuxième matériau qui subit une rétraction lorsqu'il est chauffé étant en outre prévu pour la structure non homogène de la paroi de tube (22) du tube de raccord (20),
**caractérisé par le fait que** le conducteur chauffant (32) formant l'élément chauffant (30) présente, par rapport à un plan de coupe contenant l'axe longitudinal médian (M) du tube de raccord (20), une surface de section (A) dont l'extension en direction de l'axe longitudinal médian (M) du tube de raccord (20) est plus petite qu'en direction radiale, par rapport au tube de raccord (20).

2. Raccord chauffant selon la revendication 1,
**caractérisé par le fait que** le deuxième matériau (26) est interstratifié avec le premier matériau (24).

3. Raccord chauffant selon la revendication 1,
**caractérisé par le fait que** la paroi de tube (22) du tube de raccord (20) est formée d'au moins une première couche en premier matériau (24) et d'au moins une deuxième couche en deuxième matériau (26).

4. Raccord chauffant selon la revendication 3,
**caractérisé par le fait que** la première couche en premier matériau (24) est entourée concentriquement par la deuxième couche en deuxième matériau (26).

5. Raccord chauffant selon l'une des revendications 1 à 4,
**caractérisé par le fait que** l'élément chauffant (30) est disposé en formant des zones non chauffées (Z₁, Z₂, Z₃) à l'intérieur du tube de raccord (20).

6. Raccord chauffant selon la revendication 5,
**caractérisé par le fait que** l'extension radiale du conducteur chauffant (32) est au moins égale à 30 % de l'épaisseur radiale de la paroi de tube (22).

7. Raccord chauffant selon la revendication 5 ou 6,
**caractérisé par le fait que** la surface de section (A) est rectangulaire et que le rapport entre l'extension radiale et l'extension axiale de la surface de section (A) est égal à 5:2.

8. Raccord chauffant selon l'une des revendications 1 à 7,
**caractérisé par le fait que** le pas du conducteur chauffant (32) enroulé en spirale correspond au moins à l'extension radiale du conducteur chauffant (32).
